(19) Europäisches Patentamt
European Patent Office
Office européen des brevets

(11) Veröffentlichungsnummer: **0 649 864 A1**

# (12) EUROPÄISCHE PATENTANMELDUNG

(21) Anmeldenummer: **94116066.5**

(22) Anmeldetag: **12.10.94**

(51) Int. Cl.6: **C08F 220/58**, C09K 7/02, //C08F220:58,C08F220:06, C08F226:10

(30) Priorität: **25.10.93 DE 4336310**

(43) Veröffentlichungstag der Anmeldung: **26.04.95 Patentblatt 95/17**

(84) Benannte Vertragsstaaten: **DE FR GB IT NL SE**

(71) Anmelder: **WOLFF WALSRODE AG**

**D-29655 Walsrode (DE)**

(72) Erfinder: **Koch, Wolfgang, Dr.**
**An der Warnau 40**
**D-29699 Bomlitz (DE)**
Erfinder: **Lohrie, Martin, Dr.**
**Sieverdinger Kirchweg 11a**
**D-29664 Walsrode (DE)**
Erfinder: **Jörgens, Gerhard**
**An der Warnau 3**
**D-29699 Bomlitz (DE)**
Erfinder: **Szablikowski, Klaus, Dr.**
**Claudiusstrasse 5**
**D-29664 Walsrode (DE)**

(74) Vertreter: **Braun, Rolf, Dr. et al**
**Bayer AG,**
**Konzernzentrale RP,**
**Patente Konzern**
**D-51368 Leverkusen (DE)**

(54) **Wasserlösliche Polymerisate und deren Verwendung als Bohrspüladditive.**

(57) Die vorliegende Erfindung betrifft wasserlösliche Copolymere, die aus den folgenden Gruppen

EP 0 649 864 A1

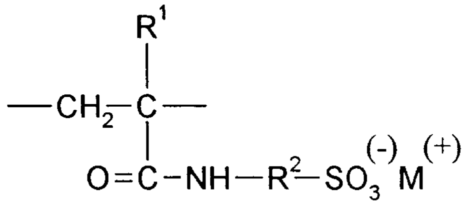

(I)

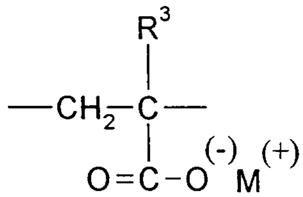

(II)

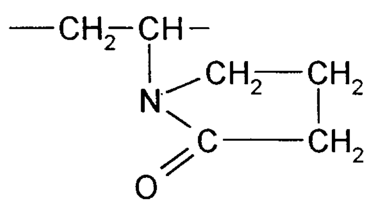

(III)

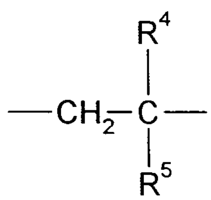

(IV)

zusammengesetzt sind. Die Copolymerisate sind insbesondere als Bohrspüladditive geeignet.

Die vorliegende Erfindung betrifft neue wasserlösliche Copolymerisate, welche als Zusätze zu Bohrspülungen, inbesondere als Fluid-loss-Additive Verwendung finden.

Im Bereich der Tiefbohrtechnik erfüllen Polymere in wasserbasischen Bohrspülungen unterschiedliche Aufgaben. So führen sie zu einer Reduzierung des Wasserverlustes vor allem beim Durchbohren von durchlässigen Formationen durch Aufbau einer dünnen Filterschicht, welche zu einer Abdichtung des Bohrloches führt. Außerdem halten sie das entstehende Bohrklein durch Dispergierung in der Schwebe und helfen damit u.a. das Bohrklein zu Tage zu fördern. Durch den Einsatz von polymeren Additiven werden außerdem die rheologischen Eigenschaften der Bohrspülungen verändert, insbesondere kommt es zu einer Erhöhung der Viskosität und Fließgrenze. Speziell Fluid-loss-Additive für Tiefbohrungen sollten eine hohe Temperaturbeständigkeit und eine geringe Störanfälligkeit in Bezug auf stark saline Bedingungen insbesondere in Bezug auf mehrwertige Kationen aufweisen und gleichzeitig die rheologischen Eigenschaften so wenig wie möglich beeinflußen, da es sonst bei Einstellung von geringen Wasserverlustwerten zu einer unerwünschten Erhöhung der plastischen Viskosität und Fließgrenze kommt.

Zur Erfüllung der oben genannten Aufgaben werden zur Zeit eine Vielzahl von bekannten Additiven genutzt. Im Temperaturbereich unter 120 C werden bevorzugt modifizierte Stärken und Carboxymethylcellulosen sowie Carboxymethylhydroxyethylcellulosen (G.V. Chilingarian, P. Vorabutr: Developments in Petroleum Sci. 11, Elsevier Scientific Publishing Company, Amsterdam, 1981, Drilling and Drilling Fluids) verwendet.

In salzfreien Bohrspülsystemen finden Copolymere auf der Basis von Acrylamid/Acrylsäure Verwendung. Diese Copolymeren verlieren jedoch nahezu vollständig ihre Wirkung, wenn sie in Systemen mit einer hohen Elektrolytkonzentration eingesetzt werden.

In den achtziger Jahren wurden synthetische hochtemperatur- und salzstabile Fluid-loss Additive entwickelt. Eine sowohl hinsichtlich der Temperaturstabilität als auch der Toleranz salinen Systemen gegenüber bessere Wirkung besitzen Copolymerisate auf der Basis Vinylsulfonat/Acrylamid. Copolymerisate dieser Art wurden bereits in zahlreichen Dokumenten beschrieben (DE 2444108, DE 3144770, DE 3701600, EP 141327, EP 152814, EP 483638, US 4357245, WO 83/2449). Die Vielzahl der entwickelten Verbindungen zeigt deutlich, wie problematisch die Formulierung eines auf das verwendete Bohrspülsystem abgestimmten Fluid-loss Additivs ist. Alle bisher beschriebenen synthetischen Polymerisate führen bei einem Einsatz bei hohen Temperaturen insbesondere in zementhaltigen Ton-Kreide-Bohrspülsystemen zu nicht befriedigenden Ergebnissen hinsichtlich ihres HT/HP-Presswasserwertes.

Aufgabe der vorliegenden Erfindung war es daher, wasserlösliche Polymerisate zu entwickeln, welche die oben genannten Nachteile nicht aufweisen, d.h. möglichst kleine HT/HP-Presswasserwerte auch nach starker Temperatureinwirkung in hochsalinen Bohrspülsystemen aufweisen und gleichzeitig die rheologischen Eigenschaften so wenig wie möglich beeinflussen.

Diese Aufgabe wird durch die vorliegende Erfindung gelöst durch die Bereitstellung von synthetischen Copolymerisaten, welche dadurch gekennzeichnet sind, daß sie zu 50 bis 95 Gew.% aus Gruppen mit der Formel:

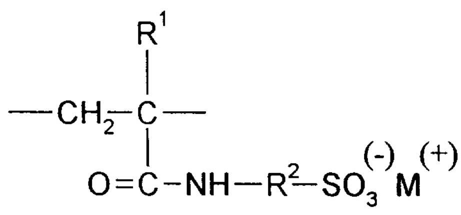

(I)

wobei $R^1$: Wasserstoff oder Methyl und $R^2$: $C_2$-$C_5$ Alkylen, insbesondere $C_4$ Alkylen, und M Ammonium oder Alkalimetall bedeutet, zu 5 bis 50 Gew.% aus Gruppen der Formel:

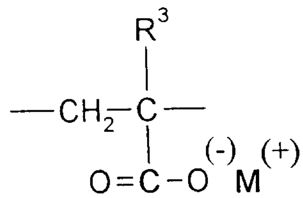

(II)

wobei $R^3$: Wasserstoff oder Methyl und M Ammonium oder Alkalimetall bedeutet, zu 6 bis 20 Gew.% aus Gruppen mit der Formel

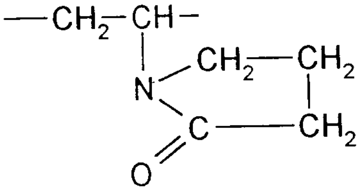

(III)

und zu 0 bis 35 Gew.% aus Gruppen mit der Formel

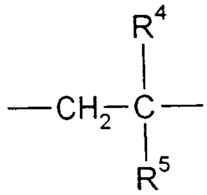

(IV)

bestehen, wobei $R^4$ Wasserstoff oder Methyl und $R^5$ $CONH_2$ oder Cyano bedeutet und die verschiedenen Gruppen statistisch im Copolymer verteilt sind.

Besonders bevorzugte Copolymerisate sind dadurch gekennzeichnet, daß sie vorzugsweise zu 60 bis 75 Gew.% aus Gruppen der Formel I, zu 10 bis 30 Gew.% aus Gruppen der Formel II, zu 6 bis 15 Gew.% aus Gruppen der Formel III und zu 0 bis 10 Gew.% aus Gruppen der Formel IV bestehen.

Als Ausgangsmaterialien für die erfindungsgemäßen Copolymerisate werden eingesetzt:

Zur Polymerisation eignen sich die meisten Vinyl- und Acrylmonomere wie (Meth)acrylsäure sowie deren Ester, (Meth)Acrylamid; N-mono und disubstituierte (Meth)Acrylamide, Acrylamidosulfonsäuren, Acrylamidobuttersäure, N-Vinylpyrrolidon und N-Methyl-N-Vinylacetat.

Besonders bevorzugt sind die folgenden Monomeren bzw. deren Salze: (Meth)Acrylsäure (Meth)-Acrylamid, Acrylamidomethylpropansulfonsäure (AMPS®), N-Vinylpyrrolidon sowie Acrylnitril.

Weiterer Gegenstand der Erfindung ist die Verwendung der erfindungsgemäßen Copolymerisate als Schutzkolloide in Bohrspülmitteln.

Die erfindungsgemäßen Copolymerisate können nach bekannten Methoden polymerisiert werden, zum Beispiel durch radikalische Polymerisation in wässriger Lösung.

Die Polymerisation wird unter einer Schutzgasatmosphäre (Stickstoff) durchgeführt. Zur Polymerisation können übliche Initiatoren verwendet werden, z.B. $K_2S_2O_8$, $(NH_4)_2S_2O_8$, $H_2O_2$/Isoascorbinsäure. Auf 100 Mol Gesamtmonomere werden 0,01 bis 1 Mol Polymerisationsinitiator eingesetzt. Die Polymerisationztemperaturen liegen bei 20 °C bis 130 °C, vorzugsweise bei 40 °C bis 80 °C.

Zur Durchführung der Polymerisation werden die Monomeren in Wasser gelöst und der pH-Wert der Lösung auf Werte zwischen pH 1 bis 10 eingestellt. Nach ausreichender Stickstoffspülung des Reaktionsansatzes wird die Reaktion durch Zugabe des Initiators bei der gewünschten Temperatur gestartet. Das erfindungsgemäße Copolymerisat kann aus der wässrigen Lösung durch Abdestillieren des Wassers oder durch Ausfällen mit einem organischen, wasserlöslichen Lösungsmittel isoliert werden. Vorzugsweise wird jedoch die wässrige Lösung des Reaktionsproduktes direkt nach Einstellung des gewünschten pH-Wertes und der Konzentration als Schutzkolloid in Bohrspülungen eingesetzt.

Die gewünschte Viskosität der wässrigen Lösung der erfindungsgemäßen Copolymerisate kann durch Zugabe von Reglern zur Reaktionslösung eingestellt werden. Als Regler können u.a. eingesetzt werden: Alkohole wie Methanol, Ethanol, Isopropanol oder Alkylmercaptane wie z.B. Dodecylmercaptan oder Isooctylthioglycolat.

Die erfindungsgemäßen Copolymerisate zeigen sehr niedrige HT/HP-fluid-loss Werte und weisen eine sehr gute Schutzkolloidwirkung auf, ohne negative Auswirkungen auf die rheologischen Eigenschaften. Sie behalten ihre sehr gute Wirkung auch bei hoher Temperaturbelastung in hochsalinären Systemen mit hoher Elektrolytbelastung.

Sie sind damit hervorragend als Hilfsmittel bei Bohrspülungen geeignet.

Üblicherweise werden in wässrigen Bohrspülsystemen die erfindungsgemäßen Copolymerisate in Konzentrationen von 0,5 bis 50 kg/m³, vorzugsweise 3 bis 30 kg/m³ eingesetzt. Zu den wässrigen

Bohrspülsystemen werden üblicherweise zur Einstellung der rheologischen Eigenschaften und zur Abdichtung der Formation weitere Hilfsstoffe wie z.B. Bentonite zugegeben. Zur Dichteerhöhung der Bohrschlämme werden Kreide, Schwerspat und Eisenoxide zugegeben. Die Zusammensetzung der Bohrschlämme variiert stark je nach den durchbohrten Formationen.

Die Herstellung der erfindungsgemäßen Copolymerisate wird durch folgendes Beispiel näher beschrieben.

**Beispiel: Herstellung der Copolymerisate**

In einem 1 l Polymerisationskolben, ausgestattet mit Rückflußkühler, Thermometer, Rührer, Gaseinleitungsrohr und Dosiereinheit, werden
470 ml Wasser und
220 g 10%ige NaOH vorgelegt und
113 g Acrylamido-N-methylpropylsulfonsäure (AMPS®),
42 g Acrylsäure (AS).
13 g N-Vinylpyrrolidon (VPyr) und
27 g Acrylamidlösung (30%ig) (AAm) dazugegeben. Durch die Lösung wird 2 Stunden bei 20 °C $N_2$ geleitet. Dann wird auf 60 bis 70 °C aufgeheizt und bei Erreichen der Temperatur werden
73 g einer 3 Gew.%igen $K_2S_2O_8$ Lösung zugegeben. Die Reaktion setzt sofort ein, was sich durch einen Temperaturanstieg um 5 bis 10 °C bemerkbar macht. Die Reaktionslösung wird weitere 2 Stunden bei 60 bis 70 °C gerührt, dann werden weitere
24 g einer 3 Gew.%igen $K_2S_2O_8$ Lösung zugegeben. Man rührt noch 2 Stunden bei Reaktionstemperatur nach und läßt dann abkühlen.
41 g einer 50%igen NaOH Lösung werden bei 20 °C zu dem Ansatz gegeben und 30 min lang intensiv verrührt.

Man erhält 1 kg Lösung der erfindungsgemäßen Copolymeren, welche sich durch folgende Angaben charakterisieren läßt:

| | |
|---|---|
| ph-Wert | 6 bis 7 |
| Konzentration | 20 Gew.% |
| Viskosität: (VT 24 Haake) | 12.000 mPa.s |

Alle Copolymersate (1-8) können nach obigem Beispiel hergestellt werden.

Tabelle 1

| Zusammensetzung der Copolymere in Gew.% | | | | | | |
|---|---|---|---|---|---|---|
| **Copolymer** | **AMPS** | **AS** | **VPyr** | **AAm** | **AN** | **Summe** |
| 1 | 71 | | 11,5 | 17,5 | | 100 |
| 2 | 90 | | 3 | 7 | | 100 |
| 3 | 61 | 34 | 5 | | | 100 |
| 4 | 75 | 11 | 8 | | 6 | 100 |
| 5 | 75 | 11 | 9 | 5 | | 100 |
| 6 | 64 | 24 | 7 | 5 | | 100 |
| 7 | 68 | 26 | 6 | | | 100 |
| 8 | 61 | 27 | 7 | | 5 | 100 |

Der HT/HP Wasserverlust beschreibt das Filtrationsverhalten unter den tatsächlichen Bedingungen im Bohrloch besser, als die sonst übliche Messmethode bei Raumtemperatur und 7,5 bar. Daher wurde als Untersuchungskriterium der HT/HP Wasserverlust nach API RP 13B-2 Sektion 3 gewählt.

**Tabelle 2: Bohrspülrezeptur**

Bei allen Beispielen wurde die folgende Spülmittelrezeptur eingesetzt:

| | |
|---|---|
| 500 g | Leitungswasser |
| 20 g | Wyoming-Bentonit |
| 20 g | Copolymer 100% |
| 50 g | Kreide, Mikrosöhl |
| 150 g | NaCl |
| 10 g | $CaCl_2 \cdot H_2O$ |
| 1 g | NaOH |
| 20 g | Zementstein aus PZ 35 |

Tabelle 3

| Anwendungstechnische Ausprüfung | | | | |
|---|---|---|---|---|
| Copolymer | HT/HP | PV | FG | Bemerkungen |
| A | 18 ml | 75 | 145 | gemäß US 4357245 |
| B | T V | | | gemäß EP 141327 |
| C | 15 ml | 36 | 10 | gemäß EP 152814 |
| 1 | TV | 26 | 5 | |
| 2 | 35 ml | 36 | 15 | |
| 3 | 25 ml | 48 | 26 | |
| 4 | 12,6 ml | 33 | 9 | erfindungsgemäße Copolymere |
| 5 | 11,4 ml | 37 | 6 | |
| 6 | 8,8 ml | 26 | 5 | |
| 7 | 10 ml | 55 | 11 | |
| 8 | 10 ml | 46 | 10 | |
| HT/HP-Wasserverlust nach 15 h, 180 °C (bei 150 °C, 35 bar)<br>PV = plastische Viskosität in mPa s<br>FG = Fließgrenze in lb/100sqft<br>TV = Totalverlust | | | | |

Die Ergebnisse der anwendungstechnischen Tests zeigen die eindeutige Überlegenheit der erfindungsgemäßen Copolymerisate insbesondere in hochsalinen Ton-Kreide-Spülungen. Die Vergleichsprodukte Copolymer A, B und C versagten unter diesen Bedingungen bzw. wiesen deutlich höhere Presswasserwerte auf. Die nicht erfindungsgemäßen Copolymerisate 1 bis 3 zeigen die Notwendigkeit des Einsatzes von Acrylsäure bzw. von mindestens 6 Gew.% Vinylpyrrolidon in den Copolymeren, um die gewünschte, hervorragende Wirksamkeit zu erreichen.

**Patentansprüche**

**1.** Wasserlösliche Copolymere, dadurch gekennzeichnet, daß sie zu 50 bis 95 Gew.% aus Gruppen mit der Formel:

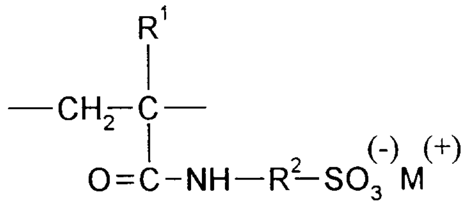

(I)

wobei $R^1$: Wasserstoff oder Methyl und $R^2$: $C_2$-$C_5$ Alkylen und M Ammonium oder Alkalimetall bedeutet, zu 5 bis 50 Gew.% aus Gruppen der Formel:

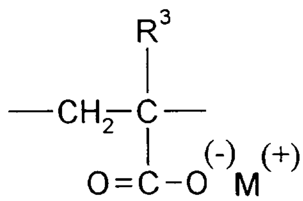

(II)

wobei $R^3$: Wasserstoff oder Methyl und M Ammonium oder Alkalimetall bedeutet, zu 6 bis 20 Gew.% aus Gruppen mit der Formel:

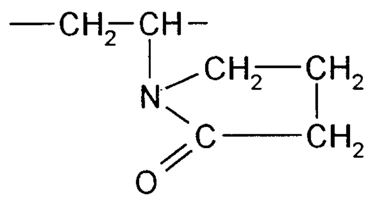

(III)

und zu 0 bis 35 Gew.% aus Gruppen mit der Formel

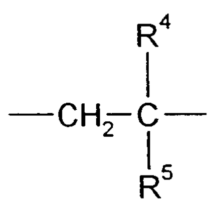

(IV)

bestehen, wobei $R^4$ Wasserstoff oder Methyl und $R^5$ $CONH_2$ oder Cyano bedeutet und die verschiedenen Gruppen statistisch im Copolymer verteilt sind.

**2.** Wasserlösliche Copolymere nach Anspruch 1, dadurch gekennzeichnet, daß sie zu 60 bis 75 Gew.% aus Gruppen der Formel I, zu 10 bis 30 Gew.-% aus Gruppen der Formel II, zu 6 bis 15 Gew.-% aus Gruppen der Formel III und zu 0 bis 10 Gew.-% aus Gruppen der Formel IV bestehen.

**3.** Bohrspülhilfsmittel auf der Basis der Copolymerisate nach einem der Ansprüche 1 oder 2.

**4.** Wäßrige Bohrspülungen, enthaltend 0,5 bis 50 kg/$m^3$ der Copolymerisate nach einem der Ansprüche 1 oder 2.

**5.** Bohrspülungen nach Anspruch 4, dadurch gekennzeichnet, daß sie außerdem noch Kreide, Bentonite, Schwerspat und/oder Eisenoxide enthalten.

Europäisches Patentamt

# EUROPÄISCHER RECHERCHENBERICHT

Nummer der Anmeldung

EP 94116066.5

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl6) |
| A | US - A - 5 135 909 (STEPHENS et al.) * Gesamt * -- | 1-5 | C 08 F 220/58<br>C 09 K 7/02<br>//(C 08 F 220/58<br>C 08 F 220:06<br>C 08 F 226:10) |
| A | US - A - 4 741 843 (GARVEY et al.) * Gesamt * ---- | 1-4 | |
| | | | RECHERCHIERTE SACHGEBIETE (Int. Cl6) |
| | | | C 08 F 220/00<br>C 08 F 226/00<br>C 09 K 7/00 |

Der vorliegende Recherchenbericht wurde für alle Patentansprüche erstellt.

| Recherchenort | Abschlußdatum der Recherche | Prüfer |
|---|---|---|
| WIEN | 30-12-1994 | PUSTERER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 62